# EUROPEAN PATENT APPLICATION

(11) **EP 2 670 016 A2**
(43) Date of publication of application: **04.12.2013**
(21) Application number: 13169359.0
(22) Date of filing: 27.05.2013
(51) Int. Cl.: H02J 3/38

(54) **Apparatus for photovoltaic power generation and method thereof**

(30) Priority: 29.05.2012 KR 20120056634
(71) Applicant: LSIS Co., Ltd., Dongan-gu, Anyang-si Gyeonggi-do 431-080 (KR)
(72) Inventor: Park, Tae Bum, 150-866 Seoul (KR)
(74) Representative: Groth & Co. KB

(57) **Abstract**

Disclosed are an apparatus and a method for photovoltaic power generation according to the exemplary embodiment of the present disclosure configured to enhance efficiency of photovoltaic power generation, wherein the apparatus having a solar module, a booster and an inverter includes a voltage sensing unit configured to sense an output voltage of the solar module, a switching unit connected to the booster in parallel, and a controller configured to selectively control the booster or the switching unit whereby the booster or the switching unit can be driven in response to an output voltage level sensed by the voltage sensing unit.

## Description

### BACKGROUND OF THE INVENTION

### Field of the invention

The present disclosure relates to an apparatus for photovoltaic power generation and a method thereof.

### Description of Related Art

In recent years, with emergence of serious problems such as global warming due to emission of carbon dioxide caused by use of fossil fuel and pollution with radioactivity by accidents at atomic power plants and nuclear waste, there is a growing concern about global environment and energy. Under such circumstances, particularly, solar photovoltaic power generation using solar radiation, among other new renewable energies including geothermal power generation using geothermal power and wind power generation using wind power, is being advantageously put to practical use worldwide as inexhaustible, pollution-free, noise-free and easily capacity-increasable clean energy source.

To be more specific, an inverter of solar photovoltaic power generation system may be largely classified to two types, that is, a DC-DC converter (booster) transmitting DC energy of solar module (solar cell) to an inverter, and an inverter converting the DC energy to AC energy. The DC-DC converter is a general term that converts DC energy to DC energy, where a booster corresponds to a part of the DC-DC converter.

Various topologies, including but not limited to, an H5 inverter and a HERIC inverter have been used to improve efficiency of inverter. Furthermore, there is a need to improve efficiency of solar photovoltaic power generation system through improvement of DC-DC converter, in addition to improvement of efficiency of inverter, and a measure is required that is capable of enhancing efficiency of photovoltaic power generation system by improving the DC-DC converter used to be applied to the existing photovoltaic power generation system.

Hereinafter, a conventional solar photovoltaic power generation system will be described with reference to the accompanying drawings.

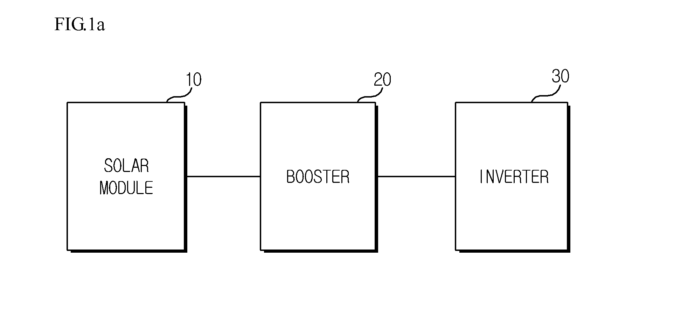

FIG.1a is a block diagram illustrating a conventional solar photovoltaic power generation system.

Referring to FIG.1a, a conventional solar photovoltaic power generation system includes a solar module (10), a booster (20) and an inverter (30). The solar module (10) generates an electric energy using a solar light, and outputs a DC voltage corresponding to the generated electrical energy to the booster (20). The booster (20) increases the DC voltage outputted from the solar module to a voltage level for operating the inverter (30) and outputs the voltage of increased level to the inverter (30).

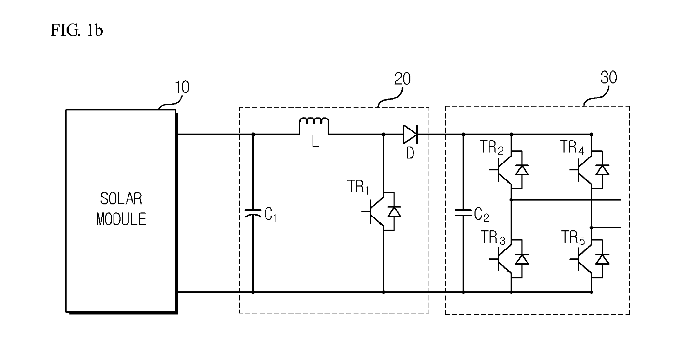

The inverter (30) serves to convert the DC voltage outputted from the booster (20) to an AC power for transmitting to a power system. Drawings including FIG.1a explain exemplary embodiments of the present disclosure and only describe essential components for explaining a technical difference between the prior art and the present disclosure. A detailed circuit configuration and operation of each blocked component of the solar photovoltaic power generation system illustrated in FIG.1a will be described with reference to FIG. 1b.

FIG.1b is a circuit diagram illustrating a detailed circuit configuration of solar photovoltaic power generation system according to prior art.

Referring to FIG. 1b, a DC voltage outputted from the solar module (10) is charged in a capacitor (C₁) of the booster (20). At this time, in a case a voltage charged in the capacitor (C₁) of the booster (20) is low (e.g., in a case an output from the solar module is low due to small quantity of solar radiation as in the morning or evening), the booster (20) is activated to increase (boost) the voltage to a predetermined voltage (e.g., threshold) and the increased voltage may be stored in a capacitor (C₂) of the inverter (30).

At this time, the reason of increasing, by the booster (20), the DC voltage outputted from the solar module (10) is because a DC voltage greater than a reference voltage is required for operating the inverter (30).

Meantime, in a case a voltage outputted from the solar module (10) is a voltage sufficient enough to operate the inverter (30) (e.g., a condition where quantity of solar radiation is large as in the midday), the booster (20) is not operated, because the inverter (30) can be operated by itself.

However, the solar photovoltaic power generation systems according to prior art as illustrated in FIGS. 1a and 1b suffer from disadvantages in that power loss is generated from an reactor (L) and a diode (D) of the booster (20) even if the booster (20) is not needed to operate.

### SUMMARY OF THE INVENTION

This section provides a general summary of the disclosure, and is not a comprehensive disclosure of its full scope or all of its features.

Exemplary aspects of the present disclosure are to substantially solve at least the above problems and/or disadvantages and to provide at least the advantages as mentioned below.

Thus, the present disclosure is directed to provide an apparatus for photovoltaic power generation configured to improve a solar power generating efficiency of a solar photovoltaic power generation system, and a method thereof.

Technical problems to be solved by the present disclosure are not restricted to the above-mentioned descriptions, and any other technical problems not mentioned so far will be clearly appreciated from the following description by skilled in the art.

In one general aspect of the present invention, there is provided an apparatus for photovoltaic power generation including a solar module, a booster and an inverter, the apparatus comprising:
a voltage sensing unit configured to sense an output voltage of the solar module; a switching unit connected to the booster in parallel; and
a controller configured to selectively control the booster or the switching unit whereby the booster or the switching unit can be driven in response to an output voltage level sensed by the voltage sensing unit.

Preferably, but not necessarily, the switching unit may include at least one of a diode, a transistor and a relay circuit.

Preferably, but not necessarily, the controller may compare the output voltage level sensed by the voltage sensing unit with a predetermined threshold, and turn on the switching unit to prevent the booster from being supplied with a power, in a case the sensed voltage level surpasses a predetermined threshold as a result of the comparison.

Preferably, but not necessarily, the controller may turn off the switching unit to allow the booster to be supplied with a power, in a case the output voltage level sensed by the voltage sensing unit does not surpass a predetermined threshold.

In another general aspect of the present invention, there is provided a method for photovoltaic power generation including a solar module, a booster, an inverter and a switching unit connected in parallel to the booster, the method comprising:
sensing an output voltage of the solar module; and
selectively controlling the booster or the switching unit in response to the output voltage level sensed by a voltage sensing unit.

Preferably, but not necessarily, the step of controlling may include comparing the sensed output voltage with the predetermined threshold; and
turning on the switching unit to prevent the booster from being supplied with a power, in a case the sensed output voltage level surpasses the predetermined threshold as a result of the comparison.

Preferably, but not necessarily, the step of comparison may further include turning off the switching unit to allow the booster to be supplied with a power, in a case the sensed output voltage level does not surpass the predetermined threshold.

The apparatus for photovoltaic power generation and the method thereof according to the present disclosure have an advantageous effect in that a power efficiency of the apparatus can be improved by prevention of power loss caused by a reactor and a diode of a booster mounted on a conventional booster circuit, in a case the booster is inactive.

### BRIEF DESCRIPTION OF THE DRAWINGS

The teachings of the present disclosure can be readily understood by considering the following detailed description in conjunction with the accompanying drawings, in which:
FIG.1a is a block diagram illustrating a conventional solar photovoltaic power generation system;
FIG.1b is a circuit diagram illustrating a detailed circuit configuration of solar photovoltaic power generation system according to prior art illustrated in FIG.1a;
FIG.2b is a block diagram illustrating an apparatus for photovoltaic power generation according to an exemplary embodiment of the present disclosure;

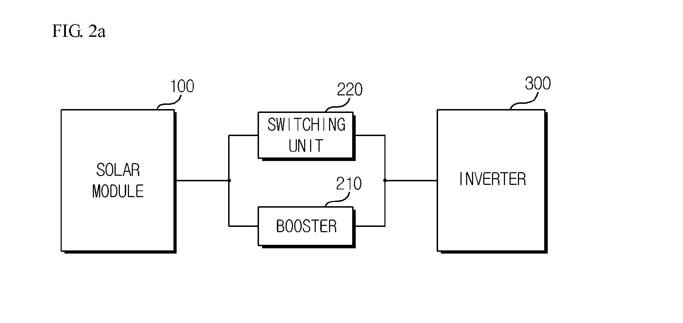

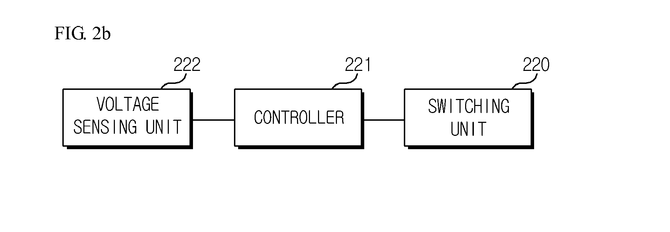

FIG.2b is a block diagram illustrating a switching unit of an apparatus for photovoltaic power generation of FIG.2a according to an exemplary embodiment of the present disclosure;

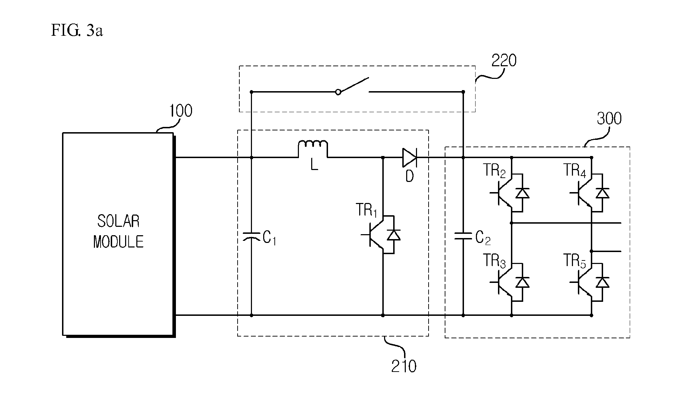

FIG. 3a is a detailed circuit diagram illustrating the switching unit of an apparatus for photovoltaic power generation of FIGS.2a and 2b according to an exemplary embodiment of the present disclosure; and

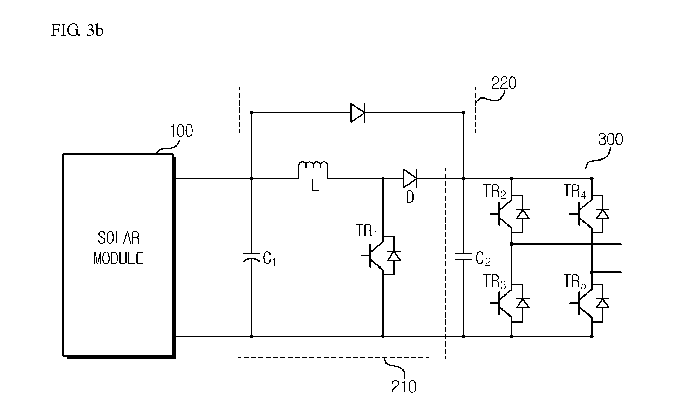

FIG. 3b is anther detailed circuit diagram illustrating the switching unit of an apparatus for photovoltaic power generation of FIGS.2a and 2b according to an exemplary embodiment of the present disclosure.

### DETAILED DESCRIPTION OF THE INVENTION

Various exemplary embodiments will be described more fully hereinafter with reference to the accompanying drawings, in which some exemplary embodiments are shown. The present inventive concept may, however, be embodied in many different forms and should not be construed as limited to the example embodiments set forth herein. Rather, the described aspect is intended to embrace all such alterations, modifications, and variations that fall within the scope and novel idea of the present disclosure.

Now, exemplary embodiments of the present disclosure will be explained in detail together with the figures.

FIG.2a is a block diagram illustrating an apparatus for photovoltaic power generation according to an exemplary embodiment of the present disclosure.

Referring to FIG2a, an apparatus for photovoltaic power generation according to an exemplary embodiment of the present disclosure (hereinafter selectively referred to as 'apparatus' for simplicity) includes a solar module (100), a booster (210), a switching unit (220) connected in parallel to the booster (210), and an inverter (300).

The solar module (100) generates an electric energy using the solar light, and outputs a DC voltage corresponding to the generated electric energy to the booster (210). The booster (210) boosts the DC voltage outputted from the solar module (100) to a voltage level for operating the inverter (300) and outputs the DC voltage to the inverter (300). The inverter (300) converts the DC voltage outputted from the booster (210) to an AC power source for transmission to an electric system.

Furthermore, the switching unit (220) may be connected to the booster (210) in parallel to form two paths between the solar module (100) and the inverter (300). The two paths, that is, a path through the booster (210) and a path through the switching unit (220), are not simultaneously used for photovoltaic power generation, and only one of the two paths may be used, if necessary.

The apparatus for photovoltaic power generation according to an exemplary embodiment of the present disclosure is basically configured in such a manner that the DC power source generated by the solar module (100) is boosted by the booster (210), transmitted to the inverter (300), and converted to an AC power source for being supplied to an electric system.

However, the boosting of the DC power source by the booster (210) is not always needed, such that a power loss may be generated, in a case a path is connected between the booster (210) and the inverter (300) even if there is no need of voltage boost by the booster (210).

Hence, in the exemplary embodiment of the present disclosure, the switching unit (220) may be connected to the booster (210) in parallel to actually interrupt the connection with the booster (210) (or by using an equivalent circuit), in a case there is no need of voltage boost by the booster (210). In other words, the switching unit (220) is turned on to short-circuit a path passing the booster (210) and to allow the power source to be supplied to a path passing the switching unit (220) and simultaneously interrupt the power supply to the booster (210).

Meanwhile, in a case there is a need of a voltage boost by the booster (210), the switching unit (220) is turned off or opened to open the path passing the switching unit (220), whereby the power source outputted to the solar module (100) is supplied only to the booster (210).

FIG.2b is a block diagram illustrating additional elements for operation of the switching unit (220) in the apparatus for photovoltaic power generation of FIG.2a according to an exemplary embodiment of the present disclosure. Referring to FIG.2b, the apparatus may further include a controller (211) and a voltage sensing unit (222) for operation of the switching unit (220).

That is, the apparatus may further include, in addition to the switching unit (220), a voltage sensing unit (222) for sensing an output voltage of the solar module (100), and a controller (221) for turning on and turning off the switching unit (220) in response to an output voltage level sensed by the voltage sensing unit (222).

The switching unit (220) needs to sense an output voltage of the solar module (100) for turning on the switching unit (220), in a case there is no need of voltage boost by the booster (210), that is, in a case the output voltage level of the solar module (100) surpasses a threshold.
Furthermore, the controller (221) may turn on or turn off the switching unit (220) in response to the voltage level of output of the solar module (100) sensed by the voltage sensing unit (222). That is, the controller (221) compares a size of the voltage outputted by the voltage sensing unit (222) with the threshold, and turns on or turns off the switching unit (220) in response to a comparison result.

Based on the above operation, in a case there is no need of operating the booster (210), an electrical connection of the booster (210), the solar module (100) and the inverter (300) can be disconnected to solve the problem of power loss by a reactor (L) and a diode (D) of the booster (210).

FIG. 3a is a detailed circuit diagram illustrating the switching unit of an apparatus for photovoltaic power generation of FIGS.2a and 2b according to an exemplary embodiment of the present disclosure.

Referring to FIG. 3a, the apparatus may include a solar module (100) configured to convert a solar energy to an electric energy, a booster (210) configured to voltage-boost an output voltage from the solar module (100), a switching unit (220) connected in parallel to the booster (210) to be turned on or turned off, and an inverter (300) configured to convert an output voltage-boosted by the booster or an output from the solar module (100) to an AC power source.

Now, an operation of configuration illustrated in FIG.3a will be briefly explained. DC energy outputted by the solar module (100) is charged in a capacitor (C₁) of the booster (210). At this time, in a case a voltage charged in the capacitor (C₁) of the booster (210) is low (e.g., in a case an output from the solar module is low due to small quantity of solar radiation as in the morning or evening), the booster (210) is activated to increase (boost) the voltage to a predetermined voltage (e.g., threshold) and the boosted voltage may be stored in a capacitor (C₂) of the inverter (300). At this time, in a case a voltage outputted from the solar module (100) is a voltage sufficient enough to operate the inverter (300) (e.g., a condition where quantity of solar radiation is large as in the midday), the booster (210) is not operated, because the inverter (300) can be operated by itself.

Thus, selective operation by the booster (210) allows the switching unit (220) to be included in the apparatus for photovoltaic power generation according to an exemplary embodiment of the present disclosure. As illustrated in FIG.3a, the switching unit (220) may be a general switch, and therefore, it should be apparent that any type of switch may be used as long as it can withstand a current/voltage level permitted to the apparatus for photovoltaic power generation according to an exemplary embodiment of the present disclosure. Thus, the switching unit (220) may be a relay circuit.

FIG. 3b is anther detailed circuit diagram illustrating the switching unit of an apparatus for photovoltaic power generation of FIGS.2a and 2b according to an exemplary embodiment of the present disclosure.

Referring to FIG.3b, the switching unit (220) may be configured with a diode. Thus, it should be apparent that any type of diodes may be used as long as the switching unit (220) can be turned on or turned off in response to control of the controller (221) illustrated in FIG.2b. Furthermore, the diode must be configured to rectify voltage/current level permitted to the apparatus for photovoltaic power generation according to an exemplary embodiment of the present disclosure.

The above-mentioned apparatus and method for photovoltaic power generation according to the exemplary embodiment of the present disclosure may, however, be embodied in many different forms and should not be construed as limited to the embodiment set forth herein. Thus, it is intended that embodiment of the present disclosure may cover the modifications and variations of this disclosure provided they come within the scope of the appended claims and their equivalents. While particular features or aspects may have been disclosed with respect to several embodiments, such features or aspects may be selectively combined with one or more other features and/or aspects of other embodiments as may be desired.

## Claims

1. An apparatus for photovoltaic power generation including a solar module (100), a booster (210) and an inverter (300), the apparatus **characterized by**:
a voltage sensing unit (222) configured to sense an output voltage of the solar module (100); a switching unit (220) connected to the booster (210) in parallel;
and
a controller (221) configured to selectively control the booster (210) or the switching unit (220) whereby the booster (210) or the switching unit (220) can be driven in response to an output voltage level sensed by the voltage sensing unit (222).

2. The apparatus of claim 1, wherein the switching unit (220) includes at least one of a diode, a transistor and a relay circuit.

3. The apparatus of claim 1, wherein the controller (221) compares the output voltage level sensed by the voltage sensing unit (222) with a predetermined threshold, and turns on the switching unit (220) to prevent the booster (210) from being supplied with a power, in a case the sensed voltage level surpasses a predetermined threshold as a result of the comparison.

4. The apparatus of claim 3, wherein the controller (221) turns off the switching unit to allow the booster to be supplied with a power, in a case the output voltage level sensed by the voltage sensing unit (222) does not surpass a predetermined threshold.

5. A method for photovoltaic power generation including a solar module (100), a booster (210), an inverter (300) and a switching unit (220) connected in parallel to the booster (210), the method comprising:
sensing an output voltage of the solar module (100); and
selectively controlling the booster (210) or the switching unit (220) in response to the output voltage level sensed by a voltage sensing unit (222).

6. The method of claim 5, wherein the step of controlling includes comparing the sensed output voltage with the predetermined threshold; and
turning on the switching unit (220) to prevent the booster (210) from being supplied with a power, in a case the sensed output voltage level surpasses the predetermined threshold as a result of the comparison.

7. The method of claim 6, wherein the step of comparison further includes turning off the switching unit (220) to allow the booster (210) to be supplied with a power, in a case the sensed output voltage level does not surpass the predetermined threshold.
